# EUROPÄISCHE PATENTSCHRIFT

(11) **EP 3 554 883 B1**
(45) Veröffentlichungstag und Bekanntmachung des Hinweises auf die Patenterteilung: **25.03.2020**
(21) Anmeldenummer: 19707728.2
(22) Anmeldetag: 19.02.2019
(51) Int. Cl.: B60K 35/00, B60K 37/06

(54) **FORMTEIL UND VERFAHREN ZUM HERSTELLEN EINES FORMTEILS**
MOULDED PART AND METHOD FOR PRODUCING A MOULDED PART
PIECE MOULEE ET PROCEDE DE FABRICATION D'UNE PIECE MOULEE

(30) Priorität: 21.02.2018 DE 102018103919
(43) Veröffentlichungstag der Anmeldung: 23.10.2019
(73) Patentinhaber: Novem Car Interior Design GmbH, 95519 Vorbach (DE)
(72) Erfinder: WEIH, Philipp, 95448 Bayreuth (DE)
(74) Vertreter: Schlögl, Markus
(86) Internationale Anmeldenummer: PCT/EP2019/054085
(87) Internationale Veröffentlichungsnummer: WO 2019/162268

(56) Entgegenhaltungen:
- EP-A1- 2 218 610
- DE-U1-202012 104 088

## Beschreibung

Die Erfindung betrifft ein Formteil, insbesondere als Formteil ausgebildetes Dekorteil und/oder Verkleidungsteil für einen Fahrzeuginnenraum. Die Erfindung betrifft ferner ein Verfahren zum Herstellen eines Formteils, insbesondere eines erfindungsgemäßen Formteils.

Im Fahrzeuginnenraum werden zahlreiche Dekor- und Verkleidungsteile eingebaut, beispielsweise Türverkleidungen, Konsolen- und Instrumentenverblendungen. Zu den Dekor- und Verkleidungsteilen zählen auch Bedientasten bzw. deren Abdeckungen.

Insbesondere bei Formteilen in Kraftfahrzeugen werden hinterleuchtete oder beleuchtete Funktionssymbole auf der Vorderseite der Dekorschicht der Formteile dargestellt. Bei solchen Funktionssymbolen besteht die Anforderungen, unterschiedliche Funktionssymbole farblich unterschiedlich darzustellen. Das kann bedeuten, dass erste Funktionssymbole mit einer ersten Lichtfarbe und zweite Funktionssymbole mit einer zweiten Lichtfarbe hinterleuchtet oder beleuchtet werden sollen.

Zum Stand der Technik wird auf die Druckschriften DE 20 2012 104 088 U1 und EP 2 218 610 A1 verwiesen.

Der Erfindung liegt die Aufgabe zugrunde ein neues Formteil anzugeben, insbesondere ein Formteil, das die vorgenannten Anforderungen zumindest weitestgehend erfüllt. Ferner ist es Aufgabe der Erfindung ein neues Verfahren zum Herstellen eines Formteils anzugeben, insbesondere ein Verfahren zum Herstellen eines Formteils, das die vorgenannten Anforderungen zumindest weitestgehend erfüllt.

Diese Aufgabe wird hinsichtlich des Formteils gelöst durch die Merkmale des Anspruchs 1 und hinsichtlich des Verfahrens durch die Merkmale des Anspruchs 8. Vorteilhafte Ausgestaltungen und Weiterbildungen sind in den jeweils abhängigen Ansprüchen angegeben.
Das erfindungsgemäße Formteil, insbesondere als Formteil ausgebildetes Dekorteil und/oder Verkleidungsteil für einen Fahrzeuginnenraum, umfasst eine lichtundurchlässige Dekorschicht, mit einer als Sichtseite ausgebildeten Vorderseite und einer der Vorderseite gegenüberliegenden Rückseite, wobei an der Vorderseite wenigstens zwei Symbole vorgesehen sind.

Das Formteil umfasst weiter einen transparenten oder transluzenten Träger, mit einer der Rückseite der Dekorschicht zugewandten Träger-Vorderseite und einer Träger-Rückseite.

Die Dekorschicht weist einen oder mehrere erste Lichtkanäle zur Lichtweiterleitung von der Rückseite der Dekorschicht zu der als Sichtseite ausgebildeten Vorderseite der Dekorschicht auf, wobei sich die ersten Lichtkanäle durch die Dekorschicht hindurch erstrecken und zur Darstellung eines ersten Symbols an der Vorderseite der Dekorschicht vorgesehen sind.

Das Formteil umfasst ferner ein oder mehrere erste Funktionselemente, wobei jedes erste Funktionselement ein erstes Lichtelement aufweist, wobei die ersten Lichtelemente zur Durchleuchtung der ersten Lichtkanäle mit einer ersten Lichtfarbe zur Darstellung des ersten Symbols an der Vorderseite der Dekorschicht vorgesehen sind.

Des Weiteren umfasst das Formteil eine erste Funktionsschicht, insbesondere eine Funktionsfolie, mit einer der Dekorschicht zugewandten Vorderseite, wobei die erste Funktionsschicht an der Träger-Rückseite vorgesehen ist, wobei die ersten Funktionselemente an der Vorderseite der ersten Funktionsschicht vorgesehen sind.

Die Dekorschicht weist des Weiteren ein oder mehrere zweite Lichtkanäle zur Lichtweiterleitung von der Rückseite der Dekorschicht zu der als Sichtseite ausgebildeten Vorderseite der Dekorschicht auf, wobei sich die zweiten Lichtkanäle durch die Dekorschicht hindurch erstrecken und zur Darstellung eines zweiten Symbols an der Vorderseite der Dekorschicht vorgesehen sind.

Das erfindungsgemäße Formteil ist dadurch gekennzeichnet, dass es ein oder mehrere zweite Funktionselemente umfasst, wobei jedes zweite Funktionselement ein zweites Lichtelement aufweist, wobei die zweiten Lichtelemente zur Durchleuchtung der zweiten Lichtkanäle mit einer zweiten Lichtfarbe zur Darstellung des zweiten Symbols an der Vorderseite der Dekorschicht vorgesehen sind. Ferner umfasst das Formteil eine, vorzugsweise blickdichte, zweite Funktionsschicht, wobei die zweite Funktionsschicht an der Rückseite der Dekorschicht vorgesehen ist, wobei die zweiten Funktionselemente in oder an der zweiten Funktionsschicht vorgesehen sind, und wobei die zweiten Funktionselemente an und/oder zumindest abschnittsweise in den zweiten Lichtkanälen vorgesehen sind, wobei die zweiten Funktionselemente die zweiten Lichtkanäle der Dekorschicht derart abdecken, dass die zweiten Lichtkanäle gegenüber Licht der ersten Lichtelemente abgeschottet werden oder abgeschottet sind.

Ein Vorteil der Erfindung besteht insbesondere darin, dass unterschiedliche Symbole farblich unterschiedlich hinterleuchtet oder beleuchtet werden können. Ferner ist es mit dem erfindungsgemäßen Formteil möglich, bei einem sehr schlanken Aufbau des Formteils nahe beieinanderliegende Symbole von Streulicht der jeweils anderen Hinterleuchtung abzuschotten.

Bei der Dekorschicht handelt es sich bevorzugt um ein Holzfurnier. Bevorzugt sind oder umfassen die ersten Lichtelemente und/oder die zweiten Lichtelemente LEDs. Bei dem Träger handelt es sich insbesondere um einen Träger aus PC und/oder ABS. Die erste Funktionsschicht ist vorzugsweise eine Funktionsfolie, beispielsweise aus PC und/oder PES und/oder PE.

Zwei oder mehrere Symbole können einen gemeinsamen Symbolbereich an der Vorderseite der Dekorschicht darstellen, beispielsweise zur Darstellung von Informationen für einen Betrachter.

Bei der ersten Lichtfarbe und/oder der zweiten Lichtfarbe kann es sich beispielsweise um weißes oder rotes Licht handeln.

Eine Weiterbildung der Erfindung sieht vor, dass die erste Funktionsschicht Leiterbahnen aufweist, wobei die Leiterbahnen zur Kontaktierung der ersten Funktionselemente vorgesehen sind. Alternativ oder additiv kann vorgesehen sein, dass die zweite Funktionsschicht Leiterbahnen aufweist, wobei die Leiterbahnen zur Kontaktierung der zweiten Funktionselemente vorgesehen sind. Die Leiterbahnen der ersten Funktionsschicht und/oder die Leiterbahnen der zweiten Funktionsschicht sind vorzugsweise auf die jeweilige Funktionsschicht aufgedruckt.

Eine Ausführungsvariante der Erfindung sieht vor, dass die erste Funktionsschicht ein erstes Kontaktelement, insbesondere eine Kontaktfahne, zur Verbindung der ersten Funktionsschicht mit einer Energiequelle aufweist. Die Energiequelle kann am oder im Formteil, insbesondere an der Rückseite des Formteils vorgesehen sein. Alternativ kann es sich auch um eine externe Energiequelle handeln.

Gemäß einer besonders bevorzugten und vorteilhaften Weiterbildung der Erfindung ist vorgesehen, dass zwischen der ersten Funktionsschicht und der zweiten Funktionsschicht wenigstens ein zweites Kontaktelement, insbesondere eine Metallfeder, zur Kontaktierung der zweiten Funktionsschicht mit der ersten Funktionsschicht vorgesehen ist, wobei das zweite Kontaktelement im Träger vorgesehen, insbesondere eingegossen oder eingespritzt, ist.

Bevorzugt ist das zweite Kontaktelement zur Verbindung der zweiten Funktionsschicht mit der Energiequelle vorgesehen, wobei die Kontaktierung beispielsweise über die erste Funktionsschicht als Zwischenkontakt vorgesehen ist.

Gemäß einer Ausführungsvariante der Erfindung sind die ersten Funktionselemente und/oder die zweiten Funktionselemente zumindest abschnittsweise im oder am Träger angeordnet, insbesondere eingegossen oder eingespritzt.

Es kann vorgesehen sein, dass an der Vorderseite der Dekorschicht eine, insbesondere transparente oder transluzente, Schutz- und/oder Optikschicht vorgesehen ist.

Ferner kann vorgesehen sein, dass zumindest ein Teil der ersten Funktionselemente und/oder zumindest ein Teil der zweiten Funktionselemente je wenigstens ein Sensorikelement aufweisen. Bei dem Sensorikelement kann es sich beispielsweise um einen Näherungs- oder Berührungssensor handeln, insbesondere um kapazitive Näherungssensoren oder resistive Systeme. Die Sensorikelemente sind beispielsweise dazu vorgesehen ein oder mehrere Schaltelemente für einen Nutzer zu realisieren.

Das erfindungsgemäße Verfahren zum Herstellen eines Formteils, insbesondere eines erfindungsgemäßen Formteils, wobei das Formteil eine lichtundurchlässige Dekorschicht mit einer als Sichtseite ausgebildeten Vorderseite und einer der Vorderseite gegenüberliegenden Rückseite, wobei an der Vorderseite wenigstens zwei Symbole vorgesehen sind, und einen transparenten oder transluzenten Träger, mit einer der Rückseite der Dekorschicht zugewandten Träger-Vorderseite und einer Träger-Rückseite, umfasst, mit einem Herstellungswerkzeug,
wobei das Verfahren die Schritte umfasst:
- Bereitstellen eines als Dekorschicht vorgesehenen lichtundurchlässigen Dekormaterials,
- Einbringen eines oder mehrerer erster Lichtkanäle in das Dekormaterial, so dass sich die ersten Lichtkanäle von der als Rückseite der Dekorschicht vorgesehenen Seite des Dekormaterials zu der als Sichtseite vorgesehenen Vorderseite durch das Dekormaterial hindurch erstrecken,
- Einbringen eines oder mehrerer zweiter Lichtkanäle in das Dekormaterial, so dass sich die zweiten Lichtkanäle von der als Rückseite der Dekorschicht vorgesehenen Seite des Dekormaterials zu der als Sichtseite vorgesehenen Vorderseite durch das Dekormaterial hindurch erstrecken,
- Bereitstellen einer ersten Funktionsschicht, wobei ein oder mehrere erste Funktionselemente an einer als Vorderseite vorgesehen Seite der ersten Funktionsschicht vorgesehen werden oder vorgesehen sind.

Das Verfahren ist durch folgende Schritte gekennzeichnet:
- Vorsehen einer, vorzugsweise blickdichten, zweiten Funktionsschicht an der als Rückseite der Dekorschicht vorgesehenen Seite des Dekormaterials,
- Vorsehen eines oder mehrerer zweiter Funktionselementen in oder an der zweiten Funktionsschicht, wobei die zweiten Funktionselemente an und/oder zumindest abschnittsweise in den zweiten Lichtkanälen vorgesehen werden, so dass die zweiten Funktionselemente die zweiten Lichtkanäle des als Dekorschicht vorgesehenen Dekormaterials abdecken,
- Einlegen oder Einsetzen des Verbunds aus Dekormaterial und zweiter Funktionsschicht mit einem oder mehreren zweiten Funktionselementen in das Herstellungswerkzeug,
- Einlegen oder Einsetzen der ersten Funktionsschicht mit einem oder mehreren ersten Funktionselementen in das Herstellungswerkzeug derart, dass die Vorderseite der ersten Funktionsschicht der als Rückseite der Dekorschicht vorgesehenen Seite des Dekormaterials zugewandt ist, und
   wobei der Verbund aus Dekormaterial und zweiter Funktionsschicht mit einem oder mehreren zweiten Funktionselementen zum einen und die erste Funktionsschicht zum anderen voneinander beabstandet sind oder beabstandet werden,
- Einspritzen oder Eingießen eines transparenten oder transluzenten Trägermaterials zur Bildung des Trägers zwischen den Verbund aus Dekormaterial und zweiter Funktionsschicht mit einem oder mehreren zweiten Funktionselementen zum einen und die erste Funktionsschicht zum anderen, wobei das Trägermaterial den Verbund aus Dekormaterial und zweiter Funktionsschicht mit zweiten Funktionselementen zum einen und die erste Funktionsschicht zum anderen miteinander verbindet,
- Aushärten des Trägermaterials,
- Herausnehmen des Formteils aus dem Herstellungswerkzeug.

Eine besonders vorteilhafte Weiterbildung des erfindungsgemäßen Verfahrens sieht vor, dass vor dem Einspritzen oder Eingießen des Trägermaterials zur Ausbildung des Trägers wenigstens ein zweites Kontaktelement zur Kontaktierung der zweiten Funktionsschicht mit der ersten Funktionsschicht zwischen dem Verbund aus Dekormaterial und zweiter Funktionsschicht mit einem oder mehreren zweiten Funktionselementen zum einen und der ersten Funktionsschicht zum anderen vorgesehen wird, wobei das zweite Kontaktelement anschließend im Träger eingegossen oder eingespritzt wird.

Ferner kann vorgesehen sein, dass an der Vorderseite der Dekorschicht oder an der als Vorderseite der Dekorschicht vorgesehenen Seite des Dekormaterials eine, insbesondere transparente oder transluzente, Schutz- und/oder Optikschicht vorgesehen, insbesondere aufgegossen oder aufgesprüht, wird.

Auch kann vorgesehen sein, dass beim Einspritzen oder Eingießen des Trägermaterials zur Ausbildung des Trägers die ersten Funktionselemente und/oder die zweiten Funktionselemente zumindest abschnittsweise im oder am Träger eingebettet werden.
Die Erfindung wird nachstehend auch hinsichtlich weiterer Merkmale und Vorteile anhand der Beschreibung von Ausführungsbeispielen und unter Bezugnahme auf die beiliegenden, schematischen Zeichnungen näher erläutert. Dabei zeigen
- FIG 1: in einer schematischen Querschnittsdarstellung einen vergrößerten Ausschnitt ein erstes Ausführungsbeispiel eines erfindungsgemäßen Formteils;
- FIG 2: in einer schematischen Darstellung die Draufsicht auf einen Ausschnitt der Vorderseite der Dekorschicht eines zweiten Ausführungsbeispiels eines erfindungsgemäßen Formteils.

Einander entsprechende Teile und Komponenten, auch über die verschiedenen Ausführungsbeispiele hinweg, sind jeweils mit den gleichen Bezugszeichen bezeichnet.

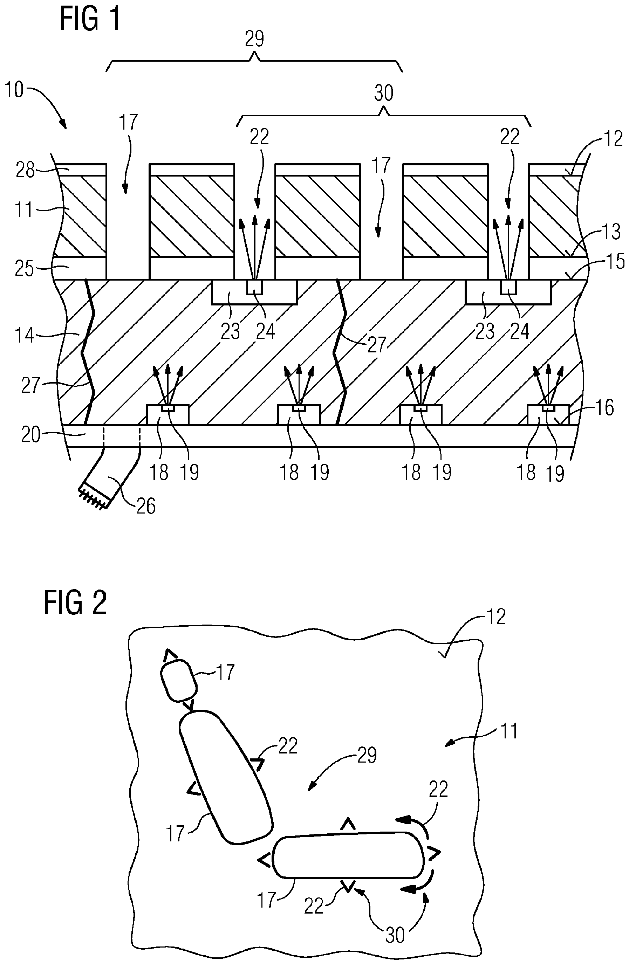

Das als Formteil 10 ausgebildete Dekor- und/oder Verkleidungsteil gemäß FIG. 1 umfasst eine lichtundurchlässige Dekorschicht 11, mit einer als Sichtseite ausgebildeten Vorderseite 12 und einer der Vorderseite 12 gegenüberliegenden Rückseite 13, wobei an der Vorderseite 12 zwei Symbole 29, 30 vorgesehen sind.

Das Formteil 10 umfasst ferner einen transparenten oder transluzenten Träger 14, mit einer der Rückseite 13 der Dekorschicht 11 zugewandten Träger-Vorderseite 15 und einer Träger-Rückseite 16.

Die Dekorschicht 11 weist mehrere erste Lichtkanäle 17 zur Lichtweiterleitung von der Rückseite 13 der Dekorschicht 11 zu der als Sichtseite ausgebildeten Vorderseite 12 der Dekorschicht 11 auf, wobei sich die ersten Lichtkanäle 17 durch die Dekorschicht 11 hindurch erstrecken und zur Darstellung eines ersten Symbols 29, wie beispielsweise das Symbol in FIG. 2, an der Vorderseite 12 der Dekorschicht 11 vorgesehen sind. Das Formteil 10 umfasst mehrere erste Funktionselemente 18, wobei jedes erste Funktionselement 18 ein erstes Lichtelement 19 aufweist, wobei die ersten Lichtelemente 19 zur Durchleuchtung der ersten Lichtkanäle 17 mit einer ersten Lichtfarbe zur Darstellung des ersten Symbols 29 an der Vorderseite 12 der Dekorschicht 11 vorgesehen sind.

Ferner umfasst das Formteil 10 eine als Funktionsfolie ausgebildete erste Funktionsschicht 20 mit einer der Dekorschicht 11 zugewandten Vorderseite 21, wobei die erste Funktionsschicht 20 an der Träger-Rückseite 16 vorgesehen ist und wobei die ersten Funktionselemente 18 an der Vorderseite 21 der ersten Funktionsschicht 20 vorgesehen sind.

Die Dekorschicht 11 weist mehrere zweite Lichtkanäle 22 zur Lichtweiterleitung von der Rückseite 13 der Dekorschicht 11 zu der als Sichtseite ausgebildeten Vorderseite 12 der Dekorschicht 11 auf, wobei sich die zweiten Lichtkanäle 22 durch die Dekorschicht 11 hindurch erstrecken und zur Darstellung eines zweiten Symbols 30, wie beispielsweise das zweite Symbol 30 in FIG. 2, an der Vorderseite 12 der Dekorschicht 11 vorgesehen sind.

Das Formteil 10 umfasst ferner mehrere zweite Funktionselemente 23, wobei jedes zweite Funktionselement 23 ein zweites Lichtelemente 24 aufweist, wobei die zweiten Lichtelemente 24 zur Durchleuchtung der zweiten Lichtkanäle 22 mit einer zweiten Lichtfarbe zur Darstellung des zweiten Symbols 30 an der Vorderseite 12 der Dekorschicht 11 vorgesehen sind.

Darüber hinaus umfasst das Formteil 10 eine blickdichte, zweite Funktionsschicht 25, wobei die zweite Funktionsschicht 25 an der Rückseite 13 der Dekorschicht 11 vorgesehen ist, wobei die zweiten Funktionselemente 23 in der zweiten Funktionsschicht 25 vorgesehen sind, und wobei die zweiten Funktionselemente 23 an den zweiten Lichtkanälen 22 vorgesehen sind, wobei die zweiten Funktionselemente 23 die zweiten Lichtkanäle 22 der Dekorschicht 11 derart abdecken, dass die zweiten Lichtkanäle 22 gegenüber Licht der ersten Lichtelemente 19 abgeschottet sind.

Die erste Funktionsschicht 20 weist aufgedruckte Leiterbahnen auf, wobei die Leiterbahnen zur Kontaktierung der ersten Funktionselemente 18 vorgesehen sind. Auch die zweite Funktionsschicht 25 weist aufgedruckte Leiterbahnen auf, welche zur Kontaktierung der zweiten Funktionselemente 23 vorgesehen sind.

Die erste Funktionsschicht 20 weist ein als Kontaktfahne ausgebildetes erstes Kontaktelement 26 auf, welches zur Verbindung der ersten Funktionsschicht 20 mit einer Energiequelle vorgesehen ist.

Zwischen der ersten Funktionsschicht 20 und der zweiten Funktionsschicht 25 sind zwei zweite Kontaktelement 27 zur Kontaktierung der zweiten Funktionsschicht 25 mit der ersten Funktionsschicht 20 vorgesehen. Die zweiten Kontaktelemente 27 sind Metallfedern. Die zweiten Kontaktelemente 26 sind im Träger eingegossen oder eingespritzt. Die zweiten Kontaktelemente 26 sind zur Verbindung der zweiten Funktionsschicht 25 mit der Energiequelle vorgesehen, wobei die Kontaktierung über die erste Funktionsschicht 20 als Zwischenkontakt vorgesehen ist.

Die ersten Funktionselemente 18 und die zweiten Funktionselemente 23 sind ebenfalls im Träger 14 eingegossen oder eingespritzt. An der Vorderseite 12 der Dekorschicht 11 ist eine transparente oder transluzente Schutz- und/oder Optikschicht 28 vorgesehen.

Die ersten Funktionselemente 18 und die zweiten Funktionselemente 23 weisen je ein Sensorikelement auf, um einen Schalter für einen Nutzer zu realisieren.

FIG. 2 zeigt in einer schematischen Darstellung die Draufsicht auf einen Ausschnitt der Vorderseite 12 der Dekorschicht 11 eines zweiten Ausführungsbeispiels eines erfindungsgemäßen Formteils 10.

In der Draufsicht sind zwei Symbole 29, 30 gezeigt, welche einen gemeinsamen Symbolbereich bilden. Bei dem ersten Symbol 29 handelt es sich um die stilisierte Darstellung eines Fahrzeugsitzes und bei dem zweiten Symbol 30 um die stilisierte Darstellung von Bewegungsrichtungen oder Einstellungsmöglichkeiten des Fahrzeugsitzes mittels Pfeilen. Die Symbole 29, 30 sind ausgebildet durch die sich durch die Dekorschicht 11 hindurch erstreckenden Lichtkanäle 17, 22, wobei die ersten Lichtkanäle 17 das erste Symbol 29 an der Vorderseite 12 der Dekorschicht 11 ausbilden und die zweiten Lichtkanäle 22 das zweite Symbol 30 an der Vorderseite 12 der Dekorschicht 11 ausbilden. Besonders treten die Symbole 29, 30 dadurch hervor, dass die Lichtkanäle 17, 20 mittels der Lichtelemente 19, 24 durchleuchtet werden. So erscheint das erste Symbol 29 mittels der Beleuchtung durch das erste Lichtelement 19 mit einer ersten, weißen Lichtfarbe in ebendieser weißen Lichtfarbe, wohingegen das zweite Symbol mittels der Beleuchtung durch das zweite Lichtelement 24 mit einer zweiten, roten Lichtfarbe in rot erscheint.

### Bezugszeichen liste

- 10: Formteil
- 11: Dekorschicht
- 12: Vorderseite
- 13: Rückseite
- 14: Träger
- 15: Träger-Vorderseite
- 16: Träger-Rückseite
- 17: erster Lichtkanal
- 18: erste Funktionselemente
- 19: erstes Lichtelement
- 20: erste Funktionsschicht
- 21: Vorderseite
- 22: zweiter Lichtkanal
- 23: zweites Funktionselemente
- 24: zweites Lichtelement
- 25: zweite Funktionsschicht
- 26: erstes Kontaktelement
- 27: zweites Kontaktelement
- 28: Schutz- und/oder Optikschicht
- 29: erstes Symbol
- 30: zweites Symbol

## Patentansprüche

1. Formteil (10), umfassend
eine lichtundurchlässige Dekorschicht (11), mit einer als Sichtseite ausgebildeten Vorderseite (12) und einer der Vorderseite (12) gegenüberliegenden Rückseite (13), wobei an der Vorderseite (12) wenigstens zwei Symbole (29; 30) vorgesehen sind,
einen transparenten oder transluzenten Träger (14), mit einer der Rückseite (13) der Dekorschicht (11) zugewandten Träger-Vorderseite (15) und einer Träger-Rückseite (16),
wobei die Dekorschicht (11) einen oder mehrere erste Lichtkanäle (17) zur Lichtweiterleitung von der Rückseite (13) der Dekorschicht (11) zu der als Sichtseite ausgebildeten Vorderseite (12) der Dekorschicht (11) aufweist, wobei sich die ersten Lichtkanäle (17) durch die Dekorschicht (11) hindurch erstrecken und zur Darstellung eines ersten Symbols (29) an der Vorderseite (12) der Dekorschicht (11) vorgesehen sind,
ein oder mehrere erste Funktionselemente (18), wobei jedes erste Funktionselement (18) ein erstes Lichtelement (19) aufweist, wobei die ersten Lichtelemente (19) zur Durchleuchtung der ersten Lichtkanäle (17) mit einer ersten Lichtfarbe zur Darstellung des ersten Symbols (29) an der Vorderseite (12) der Dekorschicht (11) vorgesehen sind,
eine erste Funktionsschicht (20) mit einer der Dekorschicht (11) zugewandten Vorderseite (21), wobei die erste Funktionsschicht (20) an der Träger-Rückseite (16) vorgesehen ist,
wobei die ersten Funktionselemente (18) an der Vorderseite (21) der ersten Funktionsschicht (20) vorgesehen sind,
wobei die Dekorschicht (11) ein oder mehrere zweite Lichtkanäle (22) zur Lichtweiterleitung von der Rückseite (13) der Dekorschicht (11) zu der als Sichtseite ausgebildeten Vorderseite (12) der Dekorschicht (11) aufweist, wobei sich die zweiten Lichtkanäle (22) durch die Dekorschicht (11) hindurch erstrecken und zur Darstellung eines zweiten Symbols (30) an der Vorderseite (12) der Dekorschicht (11) vorgesehen sind,
**dadurch gekennzeichnet, dass**
ein oder mehrere zweite Funktionselemente (23), wobei jedes zweite Funktionselement (23) ein zweites Lichtelement (24) aufweist, wobei die zweiten Lichtelemente (24) zur Durchleuchtung der zweiten Lichtkanäle (22) mit einer zweiten Lichtfarbe zur Darstellung des zweiten Symbols (30) an der Vorderseite (12) der Dekorschicht (11) vorgesehen sind,
eine zweite Funktionsschicht (25), wobei die zweite Funktionsschicht (25) an der Rückseite (13) der Dekorschicht (11) vorgesehen ist, wobei die zweiten Funktionselemente (23) in oder an der zweiten Funktionsschicht (25) vorgesehen sind, und wobei die zweiten Funktionselemente (23) an und/oder zumindest abschnittsweise in den zweiten Lichtkanälen (22) vorgesehen sind, wobei die zweiten Funktionselemente (23) die zweiten Lichtkanäle (22) der Dekorschicht (11) derart abdecken, dass die zweiten Lichtkanäle (22) gegenüber Licht der ersten Lichtelemente (19) abgeschottet werden oder abgeschottet sind.

2. Formteil nach Anspruch 1,
**dadurch gekennzeichnet,**
**dass** die erste Funktionsschicht (20) Leiterbahnen aufweist, wobei die Leiterbahnen zur Kontaktierung der ersten Funktionselemente (18) vorgesehen sind, und/oder
**dass** die zweite Funktionsschicht (25) Leiterbahnen aufweist, wobei die Leiterbahnen zur Kontaktierung der zweiten Funktionselemente (23) vorgesehen sind.

3. Formteil nach Anspruch 1 oder 2,
**dadurch gekennzeichnet, dass**
die erste Funktionsschicht (20) ein erstes Kontaktelement (26) zur Verbindung der ersten Funktionsschicht (20) mit einer Energiequelle aufweist.

4. Formteil nach einem der vorhergehenden Ansprüche,
**dadurch gekennzeichnet, dass**
zwischen der ersten Funktionsschicht (20) und der zweiten Funktionsschicht (25) wenigstens ein zweites Kontaktelement (27) zur Kontaktierung der zweiten Funktionsschicht (25) mit der ersten Funktionsschicht (20) vorgesehen ist, wobei das zweite Kontaktelement (26) im Träger (14) vorgesehen ist.

5. Formteil nach einem der vorhergehenden Ansprüche,
**dadurch gekennzeichnet, dass**
die ersten Funktionselemente (18) und/oder die zweiten Funktionselemente (23) zumindest abschnittsweise im oder am Träger (14) angeordnet sind.

6. Formteil nach einem der vorhergehenden Ansprüche,
**dadurch gekennzeichnet, dass**
an der Vorderseite (12) der Dekorschicht (11) eine Schutz- und/oder Optikschicht (28) vorgesehen ist.

7. Formteil nach einem der vorhergehenden Ansprüche,
**dadurch gekennzeichnet, dass**
dass zumindest ein Teil der ersten Funktionselemente (18) und/oder zumindest ein Teil der zweiten Funktionselemente (23) je wenigstens ein Sensorikelement aufweisen.

8. Verfahren zum Herstellen eines Formteils (10),
wobei das Formteil (10) eine lichtundurchlässige Dekorschicht (11) mit einer als Sichtseite ausgebildeten Vorderseite (12) und einer der Vorderseite (12) gegenüberliegenden Rückseite (13), wobei an der Vorderseite (12) wenigstens zwei Symbole (29; 30) vorgesehen sind, und einen transparenten oder transluzenten Träger (14), mit einer der Rückseite (13) der Dekorschicht (11) zugewandten Träger-Vorderseite (15) und einer Träger-Rückseite (16), umfasst, mit einem Herstellungswerkzeug,
wobei das Verfahren die Schritte umfasst:
- Bereitstellen eines als Dekorschicht (11) vorgesehenen lichtundurchlässigen Dekormaterials,
- Einbringen eines oder mehrerer erster Lichtkanäle (17) in das Dekormaterial, so dass sich die ersten Lichtkanäle (17) von der als Rückseite (13) der Dekorschicht (11) vorgesehenen Seite des Dekormaterials zu der als Sichtseite vorgesehenen Vorderseite (12) durch das Dekormaterial hindurch erstrecken und zur Darstellung eines ersten Symbols (29) an der Vorderseite (12) der Dekorschicht (11) vorgesehen sind,
- Einbringen eines oder mehrerer zweiter Lichtkanäle (22) in das Dekormaterial, so dass sich die zweiten Lichtkanäle (22) von der als Rückseite (13) der Dekorschicht (11) vorgesehenen Seite des Dekormaterials zu der als Sichtseite vorgesehenen Vorderseite (12) durch das Dekormaterial hindurch erstrecken und zur Darstellung eines zweiten Symbols (30) an der Vorderseite (12) der Dekorschicht (11) vorgesehen sind,
- Bereitstellen einer ersten Funktionsschicht (20), wobei ein oder mehrere Funktionselemente (18) an einer als Vorderseite (21) vorgesehen Seite der ersten Funktionsschicht (20) vorgesehen werden oder vorgesehen sind,
wobei das Verfahren durch folgende Schritte gekennzeichnet ist:
- Vorsehen einer zweiten Funktionsschicht (25) an der als Rückseite (13) der Dekorschicht (11) vorgesehenen Seite des Dekormaterials,
- Vorsehen eines oder mehrerer zweiter Funktionselemente (23) in oder an der zweiten Funktionsschicht (25), wobei die zweiten Funktionselemente (25) an und/oder zumindest abschnittsweise in den zweiten Lichtkanälen (22) vorgesehen werden, so dass die zweiten Funktionselemente (23) die zweiten Lichtkanäle (22) des als Dekorschicht (11) vorgesehenen Dekormaterials abdecken,
- Einlegen oder Einsetzen des Verbunds aus Dekormaterial und zweiter Funktionsschicht (25) mit einem oder mehreren zweiten Funktionselementen (23) in das Herstellungswerkzeug,
- Einlegen oder Einsetzen der ersten Funktionsschicht (20) mit einem oder mehreren ersten Funktionselementen (18) in das Herstellungswerkzeug derart, dass die Vorderseite (21) der ersten Funktionsschicht (20) der als Rückseite (13) der Dekorschicht (11) vorgesehenen Seite des Dekormaterials zugewandt ist, und wobei der Verbund aus Dekormaterial und zweiter Funktionsschicht (25) mit einem oder mehreren zweiten Funktionselementen (23) zum einen und die erste Funktionsschicht (20) zum anderen voneinander beabstandet sind oder beabstandet werden,
- Einspritzen oder Eingießen eines transparenten oder transluzenten Trägermaterials zur Bildung des Trägers (14) zwischen dem Verbund aus Dekormaterial und zweiter Funktionsschicht (25) mit einem oder mehreren zweiten Funktionselementen (23) zum einen und der ersten Funktionsschicht (20) zum anderen, wobei das Trägermaterial den Verbund aus Dekormaterial und zweiter Funktionsschicht (25) mit einem oder mehreren zweiten Funktionselementen (23) zum einen und die erste Funktionsschicht (20) zum anderen miteinander verbindet,
- Aushärten des Trägermaterials,
- Herausnehmen des Formteils (10) aus dem Herstellungswerkzeug.

9. Verfahren nach Anspruch 8,
**dadurch gekennzeichnet, dass**
vor dem Einspritzen oder Eingießen des Trägermaterials zur Ausbildung des Trägers (14) wenigstens ein zweites Kontaktelement (27) zur Kontaktierung der zweiten Funktionsschicht (25) mit der ersten Funktionsschicht (20) zwischen dem Verbund aus Dekormaterial und zweiter Funktionsschicht (25) mit einem oder mehreren zweiten Funktionselementen (23) zum einen und der ersten Funktionsschicht (20) zum anderen vorgesehen wird, wobei das zweite Kontaktelement (27) anschließend im Träger eingegossen oder eingespritzt wird.

10. Verfahren nach Anspruch 8 oder 9,
**dadurch gekennzeichnet, dass**
an der Vorderseite (12) der Dekorschicht (11) oder an der als Vorderseite der Dekorschicht (11) vorgesehenen Seite des Dekormaterials eine Schutz- und/oder Optikschicht (28) vorgesehen wird.

11. Verfahren nach einem der Ansprüche 8 bis 10,
**dadurch gekennzeichnet, dass**
beim Einspritzen oder Eingießen des Trägermaterials zur Ausbildung des Trägers (14) die ersten Funktionselemente (18) und/oder die zweiten Funktionselemente (23) zumindest abschnittsweise im oder am Träger (14) eingebettet werden.

## Claims

1. A molded part (10), comprising
an opaque decorative layer (11), having a front side (12) designed as a visible side and a back side (13) opposite the front side (12), wherein at least two symbols (29; 30) are provided on the front side (12),
a transparent or translucent substrate (14) having a substrate front side (15) facing the back side (13) of the decorative layer (11) and having a substrate back side (16),
wherein the decorative layer (11) has one or more first light channels (17) for transmitting light from the back side (13) of the decorative layer (11) to the front side (12) of the decorative layer (11), which is designed as the visible side, wherein the first light channels (17) extend through the decorative layer (11) and are provided for representing a first symbol (29) on the front side (12) of the decorative layer (11),
one or more first function elements (18), wherein each first function element (18) has a first light element (19), wherein the first light elements (19) are provided for illuminating the first light channels (17) with a first light color for representing the first symbol (29) on the front side (12) of the decorative layer (11),
a first function layer (20) having a front side (21) facing the decorative layer (11), wherein the first function layer (20) is provided on the back side (16) of the substrate,
wherein the first function elements (18) are provided on the front side (21) of the first function layer (20),
wherein the decorative layer (11) has one or more second light channels (22) for transmitting light from the back side (13) of the decorative layer (11) to the front side (12) of the decorative layer (11), which is designed as the visible side, wherein the second light channels (22) extend through the decorative layer (11) and are provided for representing a second symbol (30) on the front side (12) of the decorative layer (11), **characterized in that**
one or more second function elements (23) are provided, wherein each second function element (23) has a second light element (24), the second light elements (24) being provided for illuminating the second light channels (22) with a second light color for representing the second symbol (30) on the front side (12) of the decorative layer (11);
a second function layer (25) is provided, the second function layer (25) being provided on the back side (13) of the decorative layer (11), and the second function elements (23) being provided in or on the second function layer (25), and the second function elements (23) being provided in and/or on at least in some sections in the second light channels (22), the second function elements (23) covering the second light channels (22) of the decorative layer (11) in such a way that the second light channels (22) are sealed off or isolated from the light of the first light elements (19).

2. The molded part according to claim 1,
**characterized in that**
the first function layer (20) has strip conductors, wherein the strip conductors are provided for contacting the first function elements (18) and/or
the second function layer (25) has strip conductors, wherein the strip conductors are provided for contacting the second function elements (23).

3. The molded part according to claim 1 or 2,
**characterized in that**
the first function layer (20) has a first contact element (26) for connecting the first function layer (20) to an energy source.

4. The molded part according to any one of the preceding claims,
**characterized in that**
at least one second contact element (27) is provided between the first function layer (20) and the second function layer (25) for contacting the second function layer (25) with the first function layer (20), wherein the second contact element (26) is provided in the substrate (14).

5. The molded part according to any one of the preceding claims,
**characterized in that**
the first function elements (18) and/or the second function elements (23) are arranged in or on the substrate (14) in at least some sections.

6. The molded part according to any one of the preceding claims,
**characterized in that**
a protective layer and/or an optical layer (28) is/are provided on the front side (12) of the decorative layer (11).

7. The molded part according to any one of the preceding claims,
**characterized in that**
at least one part of the first function elements (18) and/or at least one part of the second function elements (23) each has/have at least one sensor element.

8. Method for manufacturing a molded part (10),
wherein the molded part (10) has an opaque decorative layer (11) having a front side (12) that is designed as the visible layer and a back side (13) opposite the front side (12), wherein at least two symbols (29; 30) are provided on the front side (12), and a transparent or translucent substrate (14) having a front side (15) of the substrate facing the back side (13) of the decorative layer (11), and a back side (16) of the substrate, using a production die,
wherein the method comprises the steps:
- preparing an opaque decorative material that is provided as the decorative layer (11),
- inserting one or more first light channels (17) into the decorative material, so that the first light channels (17) extend through the decorative material from the side of the decorative material that is provided as the back side (13) of the decorative layer (11) to the front side (12) that is provided as the visible layer, and said light channels are provided for representing a first symbol (29) on the front side (12) of the decorative layer,
- inserting one or more second light channels (22) into the decorative material, so that the second light channels (22) extend through the decorative material from the side of the decorative material that is provided as the back side (13) of the decorative layer (11) to the front side (12) that is provided as the visible side, and said second light channels are provided for representing a second symbol (30) on the front side (12) of the decorative layer (11),
- preparing a first function layer (20), wherein one or more function elements (18) are provided on a side of the first function layer (20) that is provided as the front layer (21),
wherein the method is **characterized by** the following steps:
- providing a second function layer (25) on the side of the decorative material that is provided as the back side (13) of the decorative layer (11),
- providing one or more second function elements (23) in or on the second function layer (25), wherein the second function elements (25) are provided in and/or on the second light channels (22) in at least some sections, so that the second function elements (23) cover the second light channels (22) of the decorative material that is provided as a decorative layer (11),
- placing or inserting the combination of the decorative material and the second function layer (25) having one or more second function elements (23) into the production die,
- placing or inserting the first function layer (20) having one or more first function elements (18) into the production die, such that the front side (21) of the first function layer (20) faces the side of the decorative material that is provided as the back side (13) of the decorative layer (11), and wherein the combination of the decorative material and the second function layer (25) with one or more second function elements (23), on the one hand, and the first function layer (20), on the other hand, are spaced a distance apart from one another,
- inserting or molding a transparent or translucent substrate material for forming the substrate (14) between the combination of the decorative material and the second function layer (25) having one or more second function elements (23), on the one hand, and the first function layer (20), on the other hand, wherein the substrate material bonds the combination of the decorative material and the second function layer (25) having one or more second function elements (23), on the one hand, and the first function layer (20), on the other hand,
- curing the substrate material,
- removing the molded part (10) from the production die.

9. A method according to claim 8,
**characterized in that**
before injecting or molding the substrate material to form the substrate (14), at least one second contact element (27) is provided for contacting the second function layer (25) with the first function layer (20) between the combination of the decorative material and the second function layer (25) having one or more second function elements (23), on the one hand, and the first function layer (20), on the other hand, wherein the second contact element (27) is then injected into or molded in the substrate.

10. The method according to claim 8 or 9,
**characterized in that**
a protective layer and/or an optical layer (28) is/are provided on the front side (12) of the decorative layer (11) or on the side of the decorative material provided as the front side of the decorative layer (11).

11. The method according to any one of claims 8 to 10,
**characterized in that**
during injection or molding of the substrate material to form the substrate (14), the first function elements (18) and/or the second function elements (23) are embedded in at least some sections in or on the substrate (14).

## Revendications

1. Pièce moulée (10), comprenant
une couche décorative opaque (11) avec une face avant (12) réalisée comme face d'aspect et une face arrière (13) opposée à la face avant (12), au moins deux symboles (29 ; 30) étant prévus sur la face avant (12),
un support transparent ou translucide (14) avec une face avant de support (15), tournée vers la face arrière (13) de la couche décorative (11), et une face arrière de support (16),
dans laquelle la couche décorative (11) présente un ou plusieurs premiers canaux de lumière (17) pour transmettre la lumière de la face arrière (13) de la couche décorative (11) à la face avant (12) de la couche décorative (11), réalisée comme face d'aspect, les premiers canaux de lumière (17) s'étendant à travers la couche décorative (11) et étant prévus pour représenter un premier symbole (29) sur la face avant (12) de la couche décorative (11),
un ou plusieurs premiers éléments fonctionnels (18), chaque premier élément fonctionnel (18) présentant un premier élément lumineux (19), les premiers éléments lumineux (19) étant prévus pour transilluminer les premiers canaux de lumière (17) avec une première couleur de lumière pour représenter le premier symbole (29) sur la face avant (12) de la couche décorative (11),
une première couche fonctionnelle (20) avec une face avant (21) tournée vers la couche décorative (11), la première couche fonctionnelle (20) étant prévue sur la face arrière de support (16),
dans laquelle les premiers éléments fonctionnels (18) sont prévus sur la face avant (21) de la première couche fonctionnelle (20),
dans laquelle la couche décorative (11) présente un ou plusieurs deuxièmes canaux de lumière (22) pour transmettre la lumière de la face arrière (13) de la couche décorative (11) à la face avant (12) de la couche décorative (11), réalisée comme face d'aspect, les deuxièmes canaux de lumière (22) s'étendant à travers la couche décorative (11) et étant prévus pour représenter un deuxième symbole (30) sur la face avant (12) de la couche décorative (11),
**caractérisée par**
un ou plusieurs deuxièmes éléments fonctionnels (23), chaque deuxième élément fonctionnel (23) présentant un deuxième élément lumineux (24), dans laquelle les deuxièmes éléments lumineux (24) sont prévus pour transilluminer les deuxièmes canaux de lumière (22) avec une deuxième couleur de lumière pour représenter le deuxième symbole (30) sur la face avant (12) de la couche décorative (11),
une deuxième couche fonctionnelle (25), dans laquelle la deuxième couche fonctionnelle (25) est prévue sur la face arrière (13) de la couche décorative (11), dans laquelle les deuxièmes éléments fonctionnels (23) sont prévus dans ou sur la deuxième couche fonctionnelle (25), et dans laquelle les deuxièmes éléments fonctionnels (23) sont prévus sur et/ou au moins par endroits dans les deuxièmes canaux de lumière (22), dans laquelle les deuxièmes éléments fonctionnels (23) recouvrent les deuxièmes canaux de lumière (22) de la couche décorative (11) de telle sorte que les deuxièmes canaux de lumière (22) sont, ou sont amenés à être, cloisonnés par rapport à la lumière des premiers éléments lumineux (19).

2. Pièce moulée selon la revendication 1, **caractérisée en ce que**
la première couche fonctionnelle (20) présente des pistes conductives, les pistes conductives étant prévues pour la connexion des premiers éléments fonctionnels (18), et/ou
la deuxième couche fonctionnelle (25) présente des pistes conductives, les pistes conductives étant prévues pour la connexion des deuxièmes éléments fonctionnels (23).

3. Pièce moulée selon la revendication 1 ou 2, **caractérisée en ce que** la première couche fonctionnelle (20) présente un premier élément de contact (26) pour relier la première couche fonctionnelle (20) à une source d'énergie.

4. Pièce moulée selon l'une quelconque des revendications précédentes, **caractérisée en ce qu'**entre la première couche fonctionnelle (20) et la deuxième couche fonctionnelle (25), au moins un deuxième élément de contact (27) est prévu pour la connexion de la deuxième couche fonctionnelle (25) à la première couche fonctionnelle (20), le deuxième élément de contact (26) étant prévu dans le support (14).

5. Pièce moulée selon l'une quelconque des revendications précédentes, **caractérisée en ce que** les premiers éléments fonctionnels (18) et/ou les deuxièmes éléments fonctionnels (23) sont disposés au moins par endroits dans ou sur le support (14).

6. Pièce moulée selon l'une quelconque des revendications précédentes, **caractérisée en ce que** sur la face avant (12) de la couche décorative (11), une couche de protection et/ou une couche optique (28) est/sont prévue(s).

7. Pièce moulée selon l'une quelconque des revendications précédentes, **caractérisée en ce qu'**au moins une partie des premiers éléments fonctionnels (18) et/ou au moins une partie des deuxièmes éléments fonctionnels (23) présentent respectivement au moins un élément de capteur.

8. Procédé de fabrication d'une pièce moulée (10),
dans lequel la pièce moulée (10) comprend une couche décorative opaque (11) avec une face avant (12) réalisée comme face d'aspect et une face arrière (13) opposée à la face avant (12), au moins deux symboles (29 ; 30) étant prévus sur la face avant (12), et un support transparent ou translucide (14) avec une face avant de support (15), tournée vers la face arrière (13) de la couche décorative (11), et une face arrière de support (16), avec un moule de fabrication,
dans lequel le procédé comprend les étapes consistant à :
- fournir un matériau décoratif opaque prévu comme couche décorative (11),
- pratiquer un ou plusieurs premiers canaux de lumière (17) dans le matériau décoratif de sorte que les premiers canaux de lumière (17) s'étendent de la face du matériau décoratif, prévue comme face arrière (13) de la couche décorative (11), à la face avant (12) prévue comme face d'aspect à travers le matériau décoratif et sont prévus pour représenter un premier symbole (29) sur la face avant (12) de la couche décorative (11),
- pratiquer un ou plusieurs deuxièmes canaux de lumière (22) dans le matériau décoratif de sorte que les deuxièmes canaux de lumière (22) s'étendent de la face du matériau décoratif, prévue comme face arrière (13) de la couche décorative (11), à la face avant (12), prévue comme face d'aspect, à travers le matériau décoratif et sont prévus pour représenter un deuxième symbole (30) sur la face avant (12) de la couche décorative (11),
- fournir une première couche fonctionnelle (20), un ou plusieurs éléments fonctionnels (18) étant prévus sur une face de la première couche fonctionnelle (20), prévue comme face avant (21),
dans lequel le procédé est **caractérisé par** les étapes suivantes consistant à :
- prévoir une deuxième couche fonctionnelle (25) sur la face du matériau décoratif prévue comme face arrière (13) de la couche décorative (11),
- prévoir un ou plusieurs deuxièmes éléments fonctionnels (23) dans ou sur la deuxième couche fonctionnelle (25), les deuxièmes éléments fonctionnels (25) étant prévus sur et/ou au moins par endroits dans les deuxièmes canaux de lumière (22) de sorte que les deuxièmes éléments fonctionnels (23) recouvrent les deuxièmes canaux de lumière (22) du matériau décoratif prévu comme couche décorative (11),
- insérer ou placer le composite du matériau décoratif et de la deuxième couche fonctionnelle (25) avec un ou plusieurs deuxièmes éléments fonctionnels (23) dans le moule de fabrication,
- insérer ou placer la première couche fonctionnelle (20) avec un ou plusieurs premiers éléments fonctionnels (18) dans le moule de fabrication de telle sorte que la face avant (21) de la première couche fonctionnelle (20) est tournée vers la face du matériau décoratif, prévue comme face arrière de la couche décorative (11), et dans lequel le composite du matériau décoratif et de la deuxième couche fonctionnelle (25) avec un ou plusieurs deuxièmes éléments fonctionnels (23) d'une part et la première couche fonctionnelle (20) d'autre part sont, ou sont amenés à être, espacés l'un par rapport à l'autre,
- injecter ou couler un matériau de support transparent ou translucide pour former le support (14) entre le composite du matériau décoratif et de la deuxième couche fonctionnelle (25) avec un ou plusieurs deuxièmes éléments fonctionnels (23) d'une part et la première couche fonctionnelle (20) d'autre part, dans lequel le matériau de support relie le composite du matériau décoratif et de la deuxième couche fonctionnelle (25) à un ou plusieurs deuxièmes éléments fonctionnels (23) d'une part et à la première couche fonctionnelle (20) d'autre part,
- laisser durcir le matériau de support,
- retirer la pièce moulée (10) du moule de fabrication.

9. Procédé selon la revendication 8, **caractérisé en ce qu'**avant l'injection ou la coulée du matériau de support pour réaliser le support (14), au moins un deuxième élément de contact (27) pour la connexion de la deuxième couche fonctionnelle (25) à la première couche fonctionnelle (20) est prévu entre le composite du matériau décoratif et de la deuxième couche fonctionnelle (25) avec un ou plusieurs deuxièmes éléments fonctionnels (23) d'une part et la première couche fonctionnelle (20) d'autre part, le deuxième élément de contact (27) étant ensuite coulé ou injecté dans le support.

10. Procédé selon la revendication 8 ou 9, **caractérisé en ce que** sur la face avant (12) de la couche décorative (11) ou sur la face du matériau décoratif, prévue comme face avant de la couche décorative (11), une couche de protection et/ou une couche optique (28) est/sont prévue(s).

11. Procédé selon l'une quelconque des revendications 8 à 10, **caractérisé en ce que** pendant l'injection ou la coulée du matériau de support pour réaliser le support (14), les premiers éléments fonctionnels (18) et/ou les deuxièmes éléments fonctionnels (23) sont au moins par endroits incorporés dans ou sur le support (14).
